# EUROPÄISCHE PATENTSCHRIFT

(11) **EP 1 958 226 B1**
(45) Veröffentlichungstag und Bekanntmachung des Hinweises auf die Patenterteilung: **26.08.2009**
(21) Anmeldenummer: 06830187.8
(22) Anmeldetag: 29.11.2006
(51) Int. Cl.: H01J 5/36, H01J 61/36, H01J 9/32

(54) **Metallhalogenidlampe und Verfahren zu Herstellung derselben**
Metal halid lamp and method of manufacturing said lamp
Lampe aux halogénures métalliques et son procédé de fabrication

(30) Priorität: 09.12.2005 DE 102005058897
(43) Veröffentlichungstag der Anmeldung: 20.08.2008
(73) Patentinhaber: Osram Gesellschaft mit beschränkter Haftung, 81543 München (DE)
(72) Erfinder: HÜTTINGER, Roland, 86916 Kaufering (DE); JÜNGST, Stefan, 85604 Zorneding (DE); PHAM GIA, Khanh, 85579 Neubiberg (DE); WALTER, Steffen, 85667 Oberpframmern (DE)
(86) Internationale Anmeldenummer: PCT/EP2006/069052
(87) Internationale Veröffentlichungsnummer: WO 2007/065827

(56) Entgegenhaltungen:
- EP-A2- 0 764 970
- EP-A2- 0 807 957
- DE-A1- 10 220 735
- US-A- 3 926 574
- US-A- 4 001 625
- US-B1- 6 590 342

## Beschreibung

### Technisches Gebiet

Die Erfindung betrifft eine Metallhalogenidlampe gemäß dem Oberbegriff des Anspruchs 1. Es handelt sich dabei um Lampen mit keramischem Entladungsgefäß, die insbesondere Anwendung in der Allgemeinbeleuchtung finden.

### Stand der Technik

Aus der US-B 6 590 342 ist bereits eine Metallhalogenidlampe bekannt. Die Durchführung ist mittels Glaslot in einem Stopfen abgedichtet. Um den thermischen Ausdehnungskoeffizienten besser anzupassen, wird dort eine Schicht aus Molybdänaluminid, Mo3Al, auf die Durchführung aufgebracht. Auch andere inte-rmetallische Komponenten werden für die Schicht vorgeschlagen. Die Durchführung ist ein Stift, dessen innerer Teil aus Molybdän besteht. Dabei hat die Schicht auch den zusätzlichen Zweck, besonders resistent gegen Halogene der Füllung zu sein.

Aus der US 4 001 625 ist eine Metallhalogenidlampe bekannt, bei der eine Durchführung direkt in einen Stopfen eingesintert ist.

### Darstellung der Erfindung

Es ist Aufgabe der vorliegenden Erfindung, die Abdichtung der Durchführung möglichst dauerhaft zu gestalten und eine verbesserte Haftung zwischen Durchführung und Umgebung zu erreichen.

Diese Aufgabe wird durch die kennzeichnenden Merkmale des Anspruchs 1 gelöst. Besonders vorteilhafte Ausgestaltungen finden sich in den abhängigen Ansprüchen. Anspruch 8 beschreibt ein Verfahren zur Herstellung einer erfindungsgemäßen Metallhalogenidlampe nach Anspruch 1.

Die Verschlusstechnik für Hochdruckentladungslampen mit keramischem Entladungsgefäß war bisher noch nicht zufriedenstellend gelöst.

Für den Verschluss werden jetzt Molybdän-Durchführungen als Rohr oder Stift in einem Stopfen aus einem Cermet, das insbesondere aus Anteilen Mo und Al₂O₃ besteht, zentrisch verpresst. Bevorzugt wird ein Rohr verwendet, da es mehr elastische Eigenschaften besitzt als ein Stift. Das Cermet ist in etwa in einem Verhältnis 50:50 aus den beiden Komponenten aufgebaut, insbesondere in einem Bereich 30:70 bis 70:30. Anschließend wird dieses System in einem Entladungsgefäß aus transparentem Al₂O₃ o.ä. eingesetzt. Die Anbindung des Cermetstopfens an die Al₂O₃-Innenwand des Endes des Entladungsgefäßes erfolgt dann wie bekannt über die Zugabe von Glaslot, das bei etwa 1600 °C schmilzt. Das Glaslot schafft eine feste Grenzflächenverbindung.

Dagegen ist bei der bisherigen Technik die Qualität der Verbindung zwischen Stopfen und Durchführung unbefriedigend, weil die Verbindung zwischen einer metallischen Durchführung, insbesondere einem Molybdän Rohr, und einem Glaslot an dem inerten Molybdän scheitert, das keine Reaktion mit Glaslot eingeht. Somit besteht zwischen einer Molybdän-Durchführung und einem Glaslot lediglich eine rein physikalische Bindung mit schlechter Haftwirkung. Im ständigen Temperaturwechsel zwischen Betriebszustand und ausgeschalteter Lampe kommt es daher zur Bildung von Rissen, die letztendlich zur Undichtigkeit und damit zum Lampenausfall führt.

Erfindungsgemäß wird an dieser Stelle jetzt auf Glaslot oder Schmelzkeramik verzichtet. Eine bessere Haftwirkung der Mo-Durchführung gegenüber einem Stopfen aus Cermet wird nun durch eine Aktivierung der Oberfläche der Durchführung erreicht. Mittels eines Alitierungsprozesses, auch Alumetierungsprozess genannt, wird Aluminium über die Gasphase reaktiv in die Oberfläche der Durchführung aus Molybdän eingebracht. Dabei bildet sich außen zunächst eine Mo3Al8-Schicht aus. Dies geschieht in einem Diffusionsprozess, der temperatur- und zeitabhängig ist. Dafür werden insbesondere Mo-Rohre in einer Al-haltigen Pulverbettmischung gelegt und bei Temperaturen zwischen 800 und 1200 °C in Schutzgasatmosphäre geglüht. Es entsteht an der Oberfläche der Durchführung außen ein Gradientengefüge aus einer Al-reichen Al8Mo3-Phase, an die sich weiter innen eine Al-ärmere Phase, vornehmlich Mo3Al, anschließt, die innen in das reine Mo-Gefüge des Röhrchens übergeht. Das Aluminium aus der oberflächennahen äußeren Phase, überwiegend zunächst eine Al8Mo3-Phase, ist imstande, eine Reaktion mit dem Mo des Stopfens, der aus Mo-Al₂O₃-Cermet besteht, einzugehen und damit eine feste Verbindung zwischen Stopfen und Durchführung mittels einer Haftschicht zu schaffen, die gleichzeitig Al und Mo als intermetallische Phasen enthält. Je nach Verfahrensführung wird dabei ein Teil des Al und Mo in der Haftschicht in ein Cermet aus Mo und Al₂O₃ umgewandelt.

Auf diese Weise wird die Haftfähigkeit der Grenzfläche zwischen Mo-Durchführung und Cermet-Stopfen entscheidend verbessert.

Die gute Haftung wird durch die vorübergehende Bildung eines intermetallischen Gefüges, welches sich als Gradientenstruktur vom Mo-Grundmaterial der Durchführung bis in das Cermet des Stopfens hinein bildet, erreicht. Die Bildung von Rissen, die ihren Ursprung bisher an der Grenzfläche Durchführung/Cermet-Stopfen hatten, wird dadurch deutlich reduziert.

Die Rohrabmessungen können konventionell sein, wie beispielsweise in EP-A 528 428 dargelegt. Bevorzugt ist insbesondere für die Mo-Durchführung ein Rohr mit einem Durchmesser von 0,5 bis 3 mm. Die Wandstärke ist beispielsweise 100 bis 300 µm. Das alitierte Rohr wird in den Stopfen aus Cermet eingesetzt und mit wärme behandelt, insbesondere bei 1500 bis 2000 °C. bevorzugt wird dabei ein Schutzgas, nämlich ein Inertgas wie Argon oder Stickstoff, verwendet.

Die außen an der Durchführung aus Mo befindliche Mo3Al8-Schicht bzw. das sich dort überwiegend befindende Mo3Al8 reagiert bei hoher Temperatur mit dem Sauerstoff an der Oberfläche des Cermets, so dass in dieser Schicht das Al in Al₂O₃ umgewandelt wird, wobei aus dem ursprünglichen Mo3Al8 eine an Al ärmere Phase entsteht. Letztendlich entsteht also auf der Oberfläche der ursprünglichen Mo3Al8-Schicht eine Mo3Al-Schicht, die in tieferen Schichten Al-reicher wird. Dieses Mo3Al bildet bei seiner Reaktion eine verzahnte Schicht, die besonders gute Haftung gewährleistet. Das Mo3Al8 wächst bei seiner Bildung in die tieferen Schichten des Mo-Rohrs hinein und bildet auch hier eine Verzahnung unter Bildung einer Mo3Al-reichen Schicht. Die Reaktion im Cermet-Stopfen läuft vor allem an der Oberfläche größerer Körner aus Al₂O₃ ab, wo das Al sehr reaktiv ist.

Bevorzugt wird zur Erzeugung ausreichender Mengen des reaktiven Sauerstoffs ein Inertgas-Sauerstoffgemisch eingesetzt. Das Inertgas ist ein Schutzgas aus Ar und/oder N2. Besonders effektiv ist eine Verfahrensführung bei der geringe Mengen an Sauerstoff dem Schutzgas zugegeben werden. Der Sauerstoffpartialdruck soll in der Größenordnung von 20 bis 200 ppm liegen, insbesondere höchstens 100 ppm. Gibt man mehr Sauerstoff zu, oxidiert das Molybdän an der Oberfläche zu MoO2 oder MoO3. Diese Substanzen sind leicht flüchtig und eignen sich nicht zur Verbesserung der Haftung.

### Figuren

Im folgenden soll die Erfindung anhand mehrerer Ausführungsbeispiele näher erläutert werden. Es zeigen:
- Figur 1: eine Metallhalogenidlampe, im Schnitt, schema- tisch;
- Figur 2: eine Darstellung des Verbindungsmechanismus, schematisch;
- Figur 3: ein Detail aus Figur 1, schematisch.

### Beschreibung der bevorzugten Ausführungsform

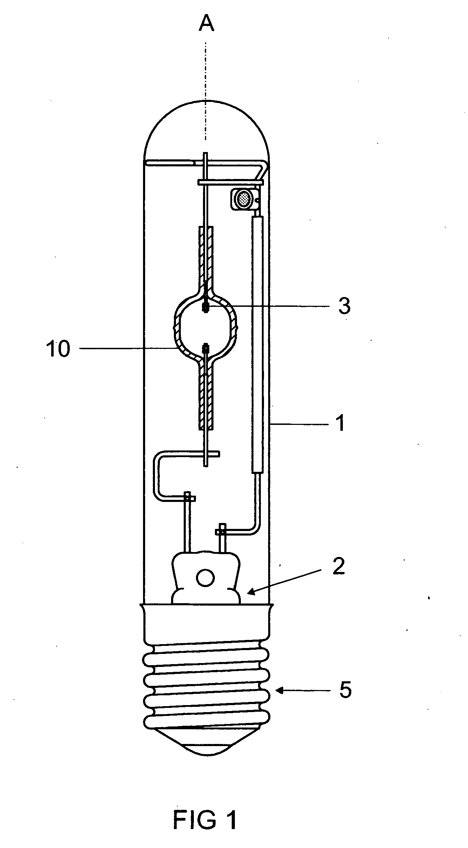

In Figur 1 ist schematisch eine Metallhalogenidlampe gezeigt mit einem Außenkolben 1 aus Hartglas oder Quarzglas, der eine Längsachse besitzt und einseitig durch eine Tellereinschmelzung 2 verschlossen ist. An der Tellereinschmelzung 2 sind zwei Stromzuführungen nach außen (nicht sichtbar) geführt. Sie enden in einem Sockel 5. Im Außenkolben ist ein zweiseitig abgedichtetes keramisches Entladungsgefäß 10 aus Al₂O₃ mit einer Füllung aus Metallhalogeniden axial eingesetzt.

Das Entladungsgefäß 10 kann zylindrisch oder innen kugelförmig oder elliptisch sein. In das Entladungsgefäß ragen Elektroden 3, die an Durchführungen aus Molybdän befestigt sind. Die Durchführung ist bevorzugt ein Rohr, kann aber auch ein Stift sein. Insbesondere kann die Durchführung auch zweigeteilt sein und nur das vordere Ende der Durchführung aus Molybdän bestehen.

Es befindet sich ein zündfähiges Gas aus der Gruppe der Edelgase im Entladungsgefäß. Des weitern befindet sich in dem Entladungsgefäß eine Mischung von Metallhalogeniden wie an sich bekannt, beispielsweise Jodide des Na, Tl und Dy sowie ggf. Quecksilber. Auch Ca kann als Halogenid verwendet werden. Das Glaslot kann beispielsweise Al₂O₃, Si02, Dy2O3 und/oder MgO enthalten.

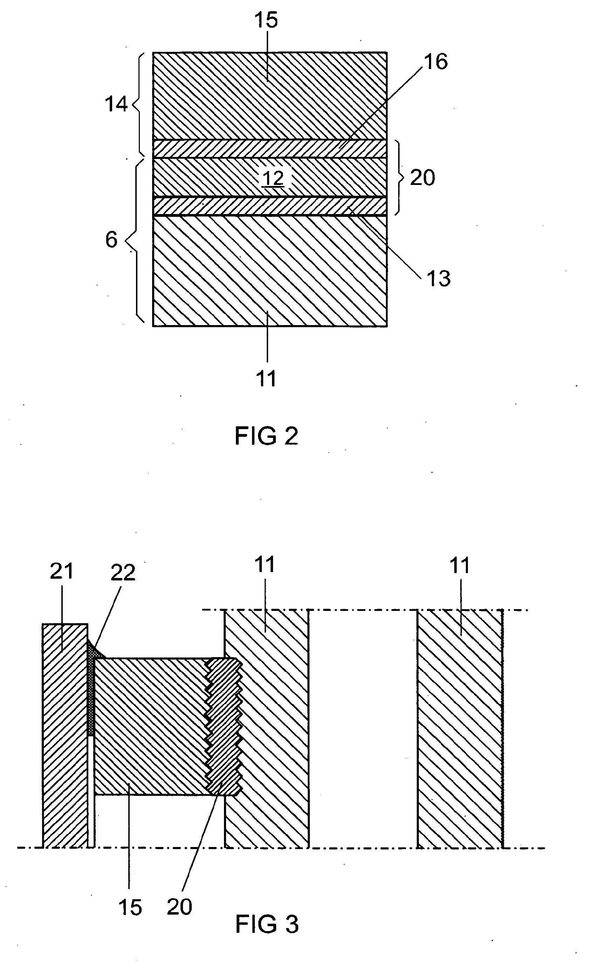

In Figur 2 ist schematisch die Verbindung zwischen Molybdän-Rohr und Cermet-Stopfen im Detail gezeigt. Dabei ist die Durchführung 6 aus Molybdän als ein Grundmaterial 11 gezeigt, wobei in der Oberfläche eine dünne Schicht 12 Al8Mo3 ausgebildet ist. Diese Schicht wird durch einen Alitierungsprozess gebildet. Unter geeignet gewählten Reaktionsbedingungen diffundiert das Aluminium in tiefere Schichten der Durchführung ein, so dass eine dünne Schicht 13 aus AlMo3 entsteht, die zwischen der Schicht 12 aus Al8Mo3 und dem Grundkörper 11 aus Mo ausgebildet ist. Diese Schichtenfolge wird durch die reaktive Diffusion des Aluminiums in die Oberfläche des Molybdän-Rohrs erzielt. Die an der Oberfläche der Durchführung befindliche Schicht aus A18Mo3 reagiert nach dem Einsetzen in den Stopfen unter Wärmebehandlung ihrerseits mit dem Mo-Anteil des Cermet-Stopfens 14, der bevorzugt bei etwa 50 %.liegt, so dass sich nun an der Oberfläche des Stopfens 14 über dem Cermet-Grundkörper 15 zunächst eine AlMo3-Phase als dünne Schicht 16 ausbildet. Diese bindet sich chemisch an die A18Mo3-Phase 12 an der Oberfläche des Molybdän-Rohrs 6 und schafft so eine chemische, dauerhafte Verbindung. Die drei Schichten 12, 13 und 16 aus den intermetallischen Phasen bilden zusammen den neuen intermetallischen Grenzflächengradienten 20, der als Haftschicht wirkt.

Real bildet sich dabei keine glatte Grenzfläche, sondern ein allmählicher Gradient, wobei diese Schichten fließend ineinander übergehen. Insbesondere ist die Grenzfläche gleicher Konzentration sprunghaft schwankend, so dass eine enge Verzahnung entsteht, wie in Figur 3 schematisch dargestellt. Die Haftschicht wird nun unter Wärmebehandlung mit einem sauerstoffhaltigen Schutzgas behandelt. In der Regel verbleibt erfindungsgemäß ein Rest der ursprünglichen Schichtenfolge in der Haftschicht, also ein teil der Al8Mo3 Phase und/oder der AlMo3-Phase, bestehen.

Anschließend wird dieses System in das Ende 21 des Entladungsgefäßes aus Al₂O₃ (PCA) eingesetzt und dort mittels Glaslot 22 eine Abdichtung zwischen Ende 21 und Stopfen 15 erreicht. Dabei ist die Durchführung als Mo-Rohr 11, dargestellt, an den nach außen der Stopfen 15 über die neuartige Haftschicht 20 angebunden ist. Die Verzahnung ist dabei nicht maßstäblich eingezeichnet.

Die Durchführung muss dabei nicht vollständig aus Molybdän bestehen. Es genügt, wenn sie teilweise, im abzudichtenden Teil bzw. der Oberfläche dieses Teils, aus Molybdän besteht. Beispielsweise kann ein hinteres Teil der Durchführung aus Niob bestehen, wie an sich bekannt oder die Durchführung einen Kern aus einem andern Material besitzen wie ebenfalls an sich bekannt.

## Patentansprüche

1. Metallhalogenidlampe, die ein lichtdurchlässiges keramisches Entladungsgefäß umfasst, wobei Durchführungen in das Entladungsgefäß durch Öffnungen an seinen Enden hineinragen, wobei jede Durchführung zumindest teilweise aus Molybdän gefertigt ist, im folgenden als Mo-Teil bezeichnet, und eine Elektrode trägt, wobei die Durchführung in der Öffnung abgedichtet ist mittels eines am Ende befindlichen Stopfens aus Cermet, das Mo und Al₂O₃ enthält, **dadurch gekennzeichnet, dass** das Mo-Teil der Durchführung über eine Haftschicht mit dem Stopfen verbunden ist, die gleichzeitig Al und Mo **als intermetallische Phasen** enthält.

2. Metallhalogenidlampe nach Anspruch 1, **dadurch gekennzeichnet, daß** die Haftschicht zum Teil aus einer intermetallischen Schicht aufgebaut ist, die einen Gradienten aufweist, wobei quer zur Lampenachse gesehen eine zentrale Zone vorhandnen ist, die viel Al relativ zu Mo enthält, und wobei sich jeweils nach außen eine Außenzone anschließt, die weniger Al relativ zu Mo enthält.

3. Metallhalogenidlampe nach Anspruch 2, **dadurch gekennzeichnet, dass** die zentrale Zone überwiegend eine Al8Mo3-Phase aufweist.

4. Metallhalogenidlampe nach Anspruch 1, **dadurch gekennzeichnet, dass** die Außenzone jeweils überwiegend eine AlMo3-Phase aufweist.

5. Metallhalogenidlampe nach Anspruch 1, **dadurch gekennzeichnet, dass** das Mo-Teil ein Rohr ist.

6. Metallhalogenidlampe nach Anspruch 1, **dadurch gekennzeichnet, dass** die Haftschicht teilweise aus einem Cermet aufgebaut ist, das Mo und Al₂O₃ enthält.

7. Metallhalogenidlampe nach Anspruch 1, **dadurch gekennzeichnet, dass** der Stopfen mittels Glaslot oder Schmelzkeramik mit dem Ende des Entladungsgefäßes verbunden ist.

8. Verfahren zur Herstellung einer Metallhalogenidlampe gemäß Anspruch 1, wobei eine Verbindung zwischen dem Stopfen und dem Mo-Teil der Durchführung durch folgende Schritte erzielt wird: (a) mittels eines Alitierungsprozesses wird Al in die Oberfläche des Mo-Teils eindiffundiert und reaktiv an Mo zu MoxAly gebunden; (b) das alitierte Mo-Teil wird in den Stopfen eingesetzt; (c) Zufuhr eines Schutzgases, insbesondere Ar und/oder N2, das insbesondere einen geringen Anteil Sauerstoff von höchstens 200 ppm Partialdruck aufweist, (d) mittels Wärmebehandlung, insbesondere 1500 bis 2000 °C in diesem Schutzgas, reagiert die dem Mo-Teil zugewandte Oberfläche des Stopfens, wobei sich zunächst ein intermetallsicher Grenzflächengradient ausbildet, der sich in Abhängigkeit von der Verfahrensführung der Wärmebehandlung teilweise in ein Cermet aus Mo und Al₂O₃ umwandelt.

## Claims

1. Metal halide lamp, which comprises a light-permeable ceramic discharge vessel, leadthroughs protruding into the discharge vessel through openings at its ends, each leadthrough being manufactured at least partially from molybdenum, referred to below as the Mo part, and bearing an electrode, the leadthrough being sealed off in the opening by means of a stopper, which is located at the end and consists of cermet, which contains Mo and Al₂O₃, **characterized in that** the Mo part of the leadthrough is joined to the stopper via an adhesive layer, which contains Al and Mo as intermetallic phases at the same time.

2. Metal halide lamp according to Claim 1, **characterized in that** the adhesive layer partially comprises an intermetallic layer, which has a gradient, with, when viewed transversely with respect to the lamp axis, a central zone being provided which contains a lot of Al in relation to Mo, and in each case an outer zone adjoining on the outside which contains less Al than Mo.

3. Metal halide lamp according to Claim 2, **characterized in that** the central zone predominantly has an Al₈Mo₃ phase.

4. Metal halide lamp according to Claim 1, **characterized in that** the outer zone in each case predominantly has an AlMo₃ phase.

5. Metal halide lamp according to Claim 1, **characterized in that** the Mo part is a tube.

6. Metal halide lamp according to Claim 1, **characterized in that** the adhesive layer partially comprises a cermet, which contains Mo and Al₂O₃.

7. Metal halide lamp according to Claim 1, **characterized in that** the stopper is joined to the end of the discharge vessel by means of glass solder or melt ceramic.

8. Method for producing a metal halide lamp according to Claim 1, a joint between the stopper and the Mo part of the leadthrough being achieved by the following steps: (a) by means of an alitization process Al is diffused into the surface of the Mo part and reactively bonded to Mo to form MoxAly; (b) the alitized Mo part is inserted into the stopper; (c) supply of a protective gas, in particular Ar and/or N₂, which in particular has a low proportion of oxygen with a partial pressure of at most 200 ppm; (d) by means of heat treatment, in particular 1500 to 2000°C in this protective gas, the surface of the stopper which faces the Mo part reacts, with first an intermetallic interfacial gradient being formed which is partially converted into a cermet consisting of Mo and Al₂O₃ as a function of the procedure for the heat treatment.

## Revendications

1. Lampe aux halogénures métalliques qui comprend une enceinte de décharge transparente en céramique, des traversées pénétrant dans l'enceinte de décharge par des ouvertures à ses extrémités, chaque traversée étant fabriquée au moins en partie en molydène désignée dans ce qui suit par partie en Mo, et portant une électrode, la traversée étant rendue étanche dans l'ouverture au moyen d'un bouchon en cermet qui contient du Mo et de l'Al2O3, **caractérisée en ce que** la partie en Mo de la traversée est reliée au bouchon par une couche d'adhérence, qui contient en même temps, de l'Al et du Mo sous la forme de phases intermétalliques.

2. Lampe aux halogénures métalliques, **caractérisée en ce que** la couche d'adhérence est constituée en partie d'une couche intermétallique qui a un gradient, une zone centrale considérée transversalement à l'axe de la lampe étant présente et contenant beaucoup d'Al par rapport à Mo et respectivement une zone extérieure se raccordant vers l'extérieur et contenant moins d'Al par rapport à Mo.

3. Lampe aux halogénures métalliques suivant la revendication 2, **caractérisée en ce que** la zone centrale a d'une manière prépondérante une phase Al8Mo3.

4. Lampe aux halogénures métalliques suivant la revendication 1, **caractérisée en ce que** la zone extérieure a respectivement d'une manière prépondérante une phase AlMo3.

5. Lampe aux halogénures métalliques suivant la revendication 1, **caractérisée en ce que** la partie de Mo est un tube.

6. Lampe aux halogénures métalliques suivant la revendication 1, **caractérisée en ce que** la couche d'adhérence est constituée en partie d'un cermet qui contient du Mo et de l'Al2O3.

7. Lampe aux halogénures métalliques suivant la revendication 1, **caractérisée en ce que** le bouchon est relié au moyen de brasure pour du verre ou d'une céramique fusible à l'extrémité de l'enceinte de décharge.

8. Procédé de fabrication d'une lampe aux halogénures métalliques suivant la revendication 1, une liaison entre le bouchon et la partie de Mo de la traversée étant obtenue par les stades suivants :
a) au moyen d'un processus d'aluminage, on fait diffuser de l'Al dans la surface de la partie de Mo et on le fixe réactivement sur du Mo pour donner du MoxAly ;
b) on insère la partie de Mo aluminée dans le bouchon ;
c) on apporte un gaz de protection, notamment de l'Ar et/ou du N2, qui a notamment une petite proportion d'oxygène d'une pression partielle d'au plus 200 ppm ;
d) au moyen d'un traitement thermique, notamment de 1500 à 2000° C, dans ce gaz de protection, la surface du bouchon tournée vers la partie du Mo réagit en formant d'abord un gradient intermétallique de surface limite qui, en fonction de la conduite du procédé du traitement thermique, se transforme en partie en un cermet composé de Mo et d'Al2O3.
